Europäisches Patentamt

European Patent Office

Office européen des brevets

(19)

(11) Publication number: **0 136 714**
**B1**

(12) **EUROPEAN PATENT SPECIFICATION**

(45) Date of publication of patent specification: **01.06.88**

(51) Int. Cl.⁴: **B 60 J 5/04**

(21) Application number: **84111846.6**

(22) Date of filing: **03.10.84**

(54) **Side door hinge mechanism in motor vehicle.**

(30) Priority: **04.10.83 JP 153917/83 u**

(43) Date of publication of application:
**10.04.85 Bulletin 85/15**

(45) Publication of the grant of the patent:
**01.06.88 Bulletin 88/22**

(84) Designated Contracting States:
**DE FR GB**

(56) References cited:
**FR-A-1 267 803**
**GB-A- 452 679**
**GB-A-1 123 970**
**US-A-2 743 773**
**US-A-2 748 856**
**US-A-2 991 117**
**US-A-3 006 683**
**US-A-3 158 395**

(73) Proprietor: **TOYOTA JIDOSHA KABUSHIKI KAISHA**
**1, Toyota-cho Toyota-shi**
**Aichi-ken 471 (JP)**

(72) Inventor: **Nomura, Kazuhiro**
**c/o TOYOTA JIDOSHA KABUSHIKI KAISHA**
**1, Toyota-cho Toyota-shi Aichi-ken (JP)**
Inventor: **Nomura, Masayuki**
**c/o TOYOTA JIDOSHA KABUSHIKI KAISHA**
**1, Toyota-cho Toyota-shi Aichi-ken (JP)**

(74) Representative: **Grams, Klaus Dieter, Dipl.-Ing. et al**
**Patentanwaltsbüro Tiedtke-Bühling-Kinne-Grupe-Pellmann-Grams-Struif Bavariaring 4**
**D-8000 München 2 (DE)**

## Description

This invention relates to improvements in a side door hinge mechanism in a motor vehicle comprising a four link hinge according to the precharacterizing portion of claim 1.

In most cases, the side door in a motor vehicle, e.g. passenger car has heretofore been installed in a manner to be rotatable about a hinge affixed to a vehicle body for opening or closing. In order to allow an occupant of the motor vehicle to open or close the side door for getting on or off the motor vehicle, a door opening angle corresponding to the total length of the side door is corresponding to the total length of the side door is required. At this time, when the space at the side of the motor vehicle is small, there are many cases where it is difficult for the occupant to get on or off the vehicle because the side door cannot be opened sufficiently.

In contrast thereto, it has been proposed to construct a side door hinge mechanism comprising a four link hinge to make it possible to move the rotational axis of the swiveling movement of a side door outside of the motor vehicle.

Thereby the required space at the side of the door can be reduced while a desired space around the feet of the occupant is secured. In consequence, even when the space at the side of the side door is small, the occupant can open or close the side door to get on or off the vehicle.

GB—A—1 123 970 discloses a side door hinge mechanism in a motor vehicle provided with a four link hinge. A movable wall member fixed to the inner link, which is mainly supporting the side door, when it is open, becomes flush with the general surface of an inner plate of the side door when the side door is closed. Two rotary center shafts on the side of the side door are mounted on the end structural element of the side door at the proximal end thereof, so that they do not interfere with the mounting of a glass in the side door.

In the side door hinge mechanism according to GB—A—1 123 970, the inner rotary link is comparatively large, whereby the space available at the transition portion between the side door and the vehicle body, which is passed by the knees of an occupant entering or leaving the vehicle is unnecessarily restricted.

It is an object of the invention to develop a side door hinge mechanism comprising a four link hinge construction, the elements of which do not interfere with the space, which is needed for the movement of the knees of an occupant, when the latter is entering or leaving the vehicle.

This problem is according to the invention solved by the features of the characterizing portion of claim 1. The outer rotary link constitutes the member mainly supporting the side door when it is open. Since the weight of the side door is supported almost completely by the outer rotary link, the inner rotary link may be designed in its dimension in such a way that more space is available for the knees of the occupant when he leaves or enters the vehicle.

Advantageous modifications of the invention derive form the subclaims.

Description will hereunder be given of one embodiment of the present invention with reference to the drawings, in which:

Fig. 1 is a schematic, plan and sectional view showing one embodiment of the side door hinge mechanism according to the present invention; and

Fig. 2 is a sectional view taken along the line III—III in Fig. 1.

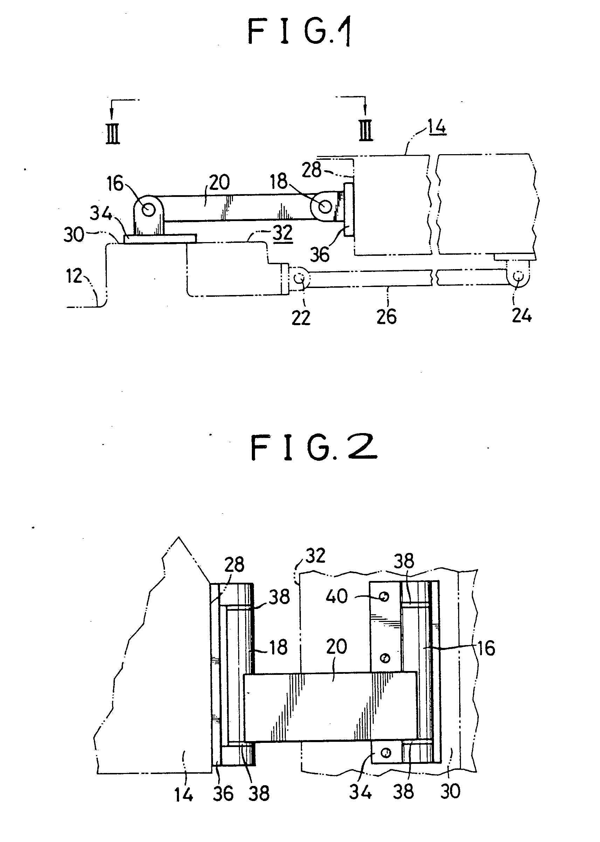

As shown in Figs. 1 and 2, according to this embodiment, in a side door hinge mechanism in a motor vehicle, a four link hinge comprises: a first outer rotary link 20 interconnecting a point on a vehicle body 12 and another point on a side door 14 on one side as rotary center shafts 16 and 18 out of four points including two points on the vehicle body 12 and spaced apart from each other and two points disposed on the side door 14 and spaced apart from each other; a second rotary link 26 interconnecting a point on the vehicle body 12 and another point on the side door 14 on another side, which is positioned inwardly of the one side, as rotary center shafts 22 and 24; a space portion between the two points on the vehicle body 12; and another space portion between the two points on the side door 14; the rotary center shaft 18 of the outer rotary link 20 on the side of the door 14 is disposed on an end panel 28 of the side door 14 on the proximal end thereof, the rotary center shaft 16 on the side of the vehicle body 12 is disposed on a surface 30 of the vehicle body adjacent the aforesaid end panel 28, and these rotary center shafts 16, 18 and the first rotary link 20 are vertically elongated, the rotary center shafts 16, 18 extending over substantially the whole of the portion where the end panel 28 and the surface 30 of the vehicle body 12 are disposed parallel and adjacent to each other in the substantially vertical state.

More specifically, one rotary center shaft 16 of the outer rotary link 20 on the side of the vehicle body 12 is secured to the surface 30 of the vehicle body 12, which is the outer side surface of a front pillar 32 in the widthwise direction of the vehicle body 12, through a pillar base 34, and the other rotary center shaft 18 is secured to the end panel 28 of the side door 14 on the proximal end thereof through a door base 36.

Bushes 38 are interposed between the rotary center shafts 16 and 18 and the pillar base 34 and the door base 36.

The pillar base 34 is formed on the surface 30 of the vehicle body 12 as long as possible in the vertical direction, and the door base 36 is also formed on the end panel 28 of the side door 14 on the proximal end thereof as long as possible in the vertical direction.

More specifically, there are imposed such restrictions that the bottom portion of the end panel 28 is curved in the circularly arcuate manner at the lower forward portion of the side door 14, and the top portion of the end panel 28 is located adjacent the inclined forward side of the door frame, so that the end panel 28 cannot extend in the range of the total height of the side door 14 in the vertical direction.

Furthermore, there is also imposed a restriction to a door opening of the vehicle body 12 corresponding to the form of the side door 14, particularly to the form of the front pillar 32 located adjacent the forward portion of the end panel 28. The rotary center shafts 16, 18 and the outer rotary link 20 should be formed as long as possible within the aforesaid limits.

In the drawing, denoted at 40 are bolt holes for receiving bolts, not shown, to mount the pillar base 34 onto the surface 30 of the vehicle body 12.

The door base 36 is solidly secured to the end panel 28 of the side door 14 on the proximal end thereof.

In this embodiment, the rotary center shafts 16 and 18 are elongated as long as possible in the vertical direction, so that the outer rotary link 20 can be elongated in the vertical direction to increase the rigidity thereof to a considerable extent.

In consequence, the weight of the side door 14 is mainly supported by the outer rotary link 20, and the second rotary link 26 is formed into one having a small diameter so as to function as a control arm for mainly controlling the moving path of opening or closing the side door 14.

As the result, such disadvantages are alleviated that the inner rotary link 26 disturbs the getting on or off the vehicle of the occupant and the appearance of the interior of the compartment is deteriorated. Furthermore, in this embodiment, the rotary center shafts 16 and 18 are elongated in the vertical direction, whereby the mounting pitch is increased for bolting up or welding the pillar base 34 and door base 36 to the surface 30 of the vehicle body 12 and the end panel 28 in order to mount the rotary center shafts 16 and 18 to the surface 30 of the vehicle body 12 and the end panel 28 of the side door 14 on the proximal end thereof, so that a load acting on the mounted surface can be reduced and pressures acting on the surfaces of the bushes 38 can be reduced, which are interposed between the pillar base 34, door base 36 and the rotary center shafts 16, 18.

Additionally, in the above embodiment, the rotary center shaft 16 on the vehicle body 12 is secured to the surface 30 of the vehicle body 12 as being the outer side surface, in the widthwise direction of the vehicle, of the front pillar 32, and the rotary center shaft 18 on the side door is secured to the end panel 28 of the side door 14 on the proximal end thereof, however, the present invention need not necessarily be limited to this, and any mounting positions may be adopted only if the rotary center shaft 18 is mounted to the end panel 28 of the side door 14 on the proximal end thereof or thereabout, the rotary center shaft 16 is mounted to the surface of the front pillar 32, which is opposed to the end panel 28 or any other member mounted to the surface of the vehicle body opposed to the end panel 28, and these rotary center shafts 16 and 18 are disposed in parallel to the substantially vertical direction.

## Claims

1. A side door hinge mechanism in a motor vehicle, wherein a four link hinge comprises an outer rotary link (20) interconnecting two points, one of them being disposed on the vehicle body (12) and the other on the side door (14) as pivotal shafts (16, 18), an inner rotary link (26) interconnecting the two further points, one of them being disposed on said vehicle body (12) and the other on said side door (14) as rotary center shafts (22, 24) being positioned inwardly of said rotary center shafts (16, 18) of said outer rotary link (20), a space portion being provided between said two points (16, 22) disposed on said vehicle body (12), and another space portion being provided between said two points (18, 24) disposed on said side door (14), said rotary center shaft (18) of said outer rotary link (20) on said side door being disposed in the neighbourhood of an end panel (28) of said side door (14) on the proximal end thereof, said rotary center shaft (16) of said outer rotary link (20) on said vehicle body being disposed on a surface (30) of said vehicle body (12) adjacent to said end panel (28), characterized in that said rotary center shafts (16, 18) of said outer rotary link (20) are vertically elongated, so that they extend substantially over the whole of a portion at which said end panel (28) of said side door (14) and said surface (30) of said vehicle body (12) are disposed vertically and adjacent to each other, so that said outer rotary link (20) is vertically elongated to such an extent that it constitutes the main load-bearing rotary link of said two rotary links (20, 26).

2. A side door hinge mechanism according to claim 1, wherein said rotary center shaft (16) of said outer rotary link (20) is secured to the outer side surface of a front pillar (32) of said vehicle body (12).

3. A side door hinge mechanism according to claim 1 or 2, wherein said rotary center shaft (18) of said outer rotary link (20) is secured to said end panel (28) of said side door (14).

4. A side door hinge mechanism according to claim 2 or 3, wherein said outer rotary link (20) is arranged substantially parallel to said side door (14) at a position outwardly of said front pillar (32).

5. A side door hinge mechanism according to any one of claims 1 to 4, wherein said inner rotary link (26) is made to constitute a control arm for controlling a moving path of opening or closing said side door (14).

## Patentansprüche

1. Seitentürgelenkmechanismus für ein Kraftfahrzeug, mit einem Vierergelenk, das einen äußeren Schwenkarm (20), der zwei Punkte miteinander verbindet, von denen einer an der Fahrzeugkarosserie (12) und der andere an der Seitentür (14) jeweils als Gelenkzapfen (16, 18) angeordnet ist, und einen inneren Schwenkarm (26) aufweist, der zwei weitere Punkte miteinander verbindet, von denen einer an der Fahrzeugkarosserie (12) und der andere an der Seitentür (14) jeweils als Gelenkzapfen (22, 24) einwärts der Gelenkzapfen (16, 18) des äußeren Schwenkarms (20) angeordnet ist, wobei zwischen den beiden an der Fahrzeugkarosserie (12) angeordneten Punkten (16, 22) ein Abstand vorgesehen ist und zwischen den beiden an der Seitentür (14) angeordneten Punkte (18, 24) ein anderer Abstand vorgesehen ist, wobei der seitentürseitige Gelenkzapfen (18) des äußeren Schwenkarms (20) in der Nähe eines Endblechs (28) der Seitentür an deren gelenkseitigem Ende angeordnet ist, wobei der fahrzeugkarosserieseitige Gelenkzapfen (16) des äußeren Schwenkarms (20) auf einer neben dem Endblech (28) an der Fahrzeugkarosserie (12) angeordneten Fläche (30) angeordnet ist, dadurch gekennzeichnet, daß die Gelenkzapfen (16, 18) des äußeren Schwenkarms (20) in Vertikalrichtung verlängert sind, so daß sie sich etwa über die gesamte Länge eines Abschnitts erstrecken, an dem das Endblech (28) der Seitentür (14) und die Fläche (30) der Fahrzeugkarosserie (12) vertikal und nahe aneinander angeordnet sind, so daß der äußere Schwenkarm (20) in Vertikalrichtung in einem solchen Ausmaß verlängert ist, daß er den die Hauptlast tragenden Schwenkarm der beiden Schwenkarme (20, 26) bildet.

2. Seitentürgelenkmechanismus nach Anspruch 1, bei dem der Gelenkzapfen (16) des äußeren Schwenkarms (20) an die äußere Seitenfläche einer vorderen Stütze (32) der Fahrzeugkarosserie (12) befestigt ist.

3. Seitentürgelenkmechanismus nach Anspruch 1 oder 2, bei dem der Gelenkzapfen (18) des äußeren Schwenkarms (20) an das Endblech (28) der Seitentür (14) befestigt ist.

4. Seitentürgelenkmechanismus nach Anspruch 2 oder 3, bei dem der äußere Schwenkarm (20) auswärts der vorderen Stütze (32) etwa parallel zur Seitentür (14) angeordnet ist.

5. Seitentürgelenkmechanismus nach einem der Ansprüche 1 bis 4, bei dem der innere Schwenkarm (26) derart ausgebildet ist, daß er einen Steuerarm zur Steuerung des Bewegungswegs der Seitentür (14) beim Öffnen und Schließen bildet.

**Revendications**

1. Un mécanisme d'articulation de porte latérale pour un véhicule automobile, dans lequel une articulation à quatre biellettes comporte une biellette extérieure rotative (20) reliant deux points, dont l'un est disposé sur la caisse (12) du véhicule et l'autre sur la porte latérale (14) sous la forme d'arbres pivotants (16, 18), une biellette rotative intérieure (26) reliant deux autres points, l'un étant disposé sur ladite caisse de véhicule (12) et l'autre sur ladite porte latérale (14) sous la forme d'axes rotatifs (22, 24) disposés à l'intérieur desdits arbres rotatifs (16, 18) de ladite biellette rotative extérieure (20), un intervalle étant prévu entre les deux points (16, 22) disposés sur ladite caisse de véhicule (12), et un autre intervalle étant prévu entre les deux points (18, 24) disposés sur ladite porte latérale (14), ledit axe rotatif (18) de ladite biellette rotative extérieure (20) sur ladite porte latérale étant disposé à proximité d'un panneau d'extrémité (28) de ladite porte latérale (14) à son extrémité proximale, ledit axe rotatif (16) de ladite biellette rotative extérieure sur ledit châssis de véhicule étant disposé sur une surface (30) de ladite caisse de véhicule (12) adjacente audit panneau d'extrémité (28), caractérisé en ce que lesdits axes rotatifs (16, 18) de ladite biellette rotative extérieure (20) sont disposés verticalement, de telle façon qu'ils s'étendent sensiblement sur toute la partie où ledit panneau d'extrémité (28) de ladite porte latérale (14) et ladite surface (30) de ladite caisse de véhicule (12) sont disposés verticalement et adjacents l'un à l'autre, de telle façon que ladite biellette rotative extérieure (20) soit disposée verticalement jusqu'à un point où elle constitue la biellette rotative principale de support de charge desdites deux biellettes rotatives (20, 26).

2. Un mécanisme d'articulation de porte latérale selon la revendication 1, dans lequel ledit axe rotatif (16) de ladite biellette rotative extérieure (20) est fixé à la surface latérale extérieure d'un pilier frontal (32) de ladite caisse de véhicule (12).

3. Un mécanisme d'articulation de porte latérale selon la revendication 1 ou 2, dans lequel ledit axe rotatif (18) de ladite biellette rotative extérieure (20) est fixé audit panneau d'extrémité (28) de ladite porte latérale (14).

4. Un mécanisme d'articulation de porte latérale selon la revendication 2 ou 3, dans lequel ladite biellette rotative extérieure (20) est disposée de façon sensiblement parallèle à ladite porte latérale (14) en une position située à l'extérieur dudit pilier frontal (32).

5. Un mécanisme d'articulation de porte latérale selon l'une quelconque des revendications 2 à 4, dans lequel ladite biellette rotative intérieure (26) est réalisée de façon à constituer un bras de commande destiné à commander le trajet de déplacement d'ouverture et de fermeture de ladite porte latérale (14).

# F I G.1

# F I G.2